# FASCICULE DE BREVET EUROPEEN

(11) **EP 1 148 207 B1**
(45) Date de publication et mention de la délivrance du brevet: **20.07.2005**
(21) Numéro de dépôt: 01400906.2
(22) Date de dépôt: 09.04.2001
(51) Int. Cl.: E21B 43/01, E21B 19/00

(54) **Dispositif de connexion d'une ligne immergée de transport de fluide**
Verbindungsvorrichtung für eine Unterwasser-Flüssigkeitstransportleitung
Connecting apparatus for a submerged fluid transporting line

(30) Priorité: 17.04.2000 FR 0004913
(43) Date de publication de la demande: 24.10.2001
(73) Titulaire: TECHLAM, F-68701 Cernay (FR)
(72) Inventeur: Moog, Olivier P., 68700 Aspach-le-Haut (FR); Thuet, Sylvain, 68800 Roderen (FR)
(74) Mandataire: David, Alain

(56) Documents cités:
- FR-A- 2 689 603
- FR-A- 2 780 763
- GB-A- 2 162 799
- GB-A- 2 202 021
- US-A- 3 841 665
- US-A- 4 068 868
- US-A- 4 199 847
- US-A- 4 371 291
- US-A- 4 907 914
- US-A- 4 943 188
- US-A- 5 318 385
- US-A- 5 947 642

## Description

### Domaine de la technique

La présente invention appartient au domaine de l'offshore pétrolier et elle concerne plus particulièrement des systèmes de connexion de lignes immergées de transport de fluide (tous types de « risers ») à des supports flottants (de type FPSO, TLP, SPAR, bouée, etc.).

### Art antérieur

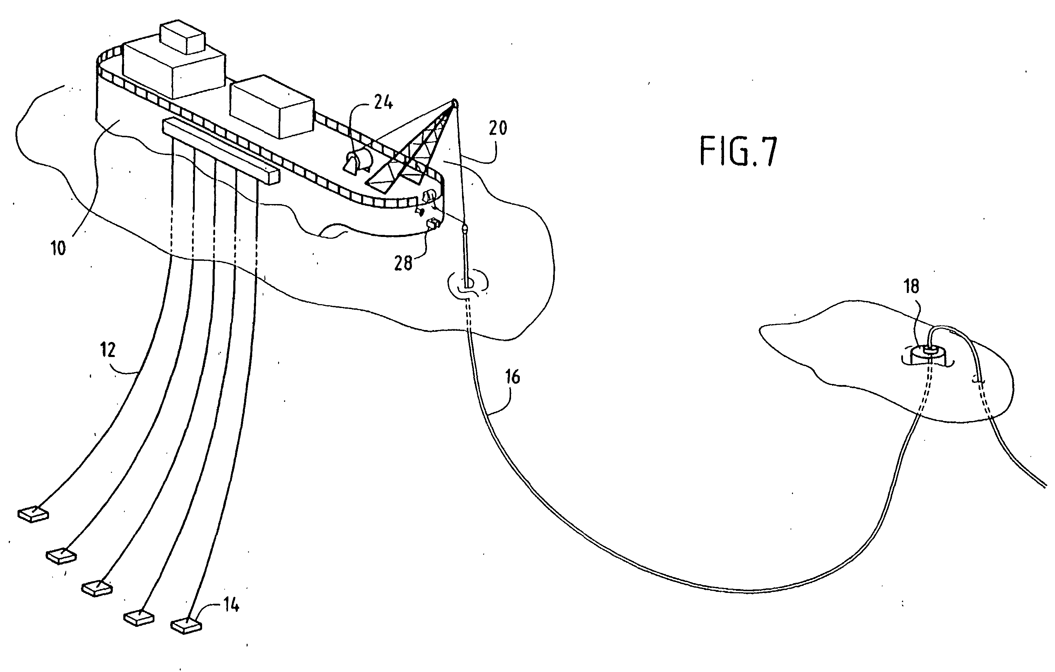

La figure 7 illustre de façon très schématique une partie d'une installation dans le domaine de l'offshore pétrolier. On note un flotteur de production (floating production storage and offloading unit « FPSO » 10) disposé en général juste au dessus du champ pétrolifère ou gazier à exploiter. Des structures tubulaires 12 ou « risers » relient les différentes têtes de puits 14 de ce champ à ce support flottant. De ce flotteur partent des lignes rigides d'exportation du fluide pétrolier (par exemple la ligne de transport 16) vers des navires-citernes de transport (non représentés). Pour des raisons de sécurité, ces tankers sont relativement éloignés du flotteur 10 et la liaison support flottant-tanker se fait donc au travers d'un relais d'amarrage constitué par une bouée semi-immergée 18.

Le brevet US 5 947 642 montre les caractéristiques du préambule de la revendication 1.

Du fait du positionnement variable du FPSO et de la bouée notamment en cas de fortes houles (des variations horizontales sur une distance de 150 m sont alors courantes), les différentes connexions des risers et des lignes de transport au niveau du FPSO ou de la bouée doivent présenter une certaine flexibilité. Les brevets US 4 943 188 et US 4 907 914 montrent des moyens d'articulation bien adaptés aux connexions des risers.

Toutefois, et comme le montre très schématiquement la figure 6, l'accrochage au FPSO 10 d'une ligne export 16 de transport de fluide pétrolier est effectuée actuellement au moyen de deux lignes de tirage 20, 22 fixées à une extrémité de la ligne de transport et qui doivent être déplacées dans deux directions différentes (au moyen de treuils 24, 26 respectivement) pour que cette ligne de transport 16 puissent venir s'accrocher exactement sur des réceptacles en berceau 28 portés par le FPSO.

Or, un tel principe d'accrochage traditionnel est particulièrement difficile à mettre en oeuvre dans une installation en mer. De plus, les interférences éventuelles des lignes de tirage avec les installations du FPSO ou avec les chaînes d'ancres du flotteur ne facilitent pas cette installation.

### Définition et objet de l'invention

La présente invention a pour but de pallier les inconvénients précités en proposant un système de connexion dont l'installation soit particulièrement aisée. Un autre but de l'invention est d'obtenir un système fiable dans le temps. Encore un but de l'invention est de réaliser un système qui puisse fonctionner quel que soit le type de ligne de transport utilisé.

Ces buts sont atteints par un dispositif de connexion d'une structure tubulaire immergée sur une structure de support flottante comprenant des premier et second éléments de connexion tubulaires concentriques reliés respectivement à une extrémité de la structure tubulaire immergée et à la structure de support flottante, caractérisé en ce que ledit premier élément de connexion tubulaire comportant d'une part un premier épaulement destiné à coopérer avec une première face d'appui correspondante dudit second élément de connexion tubulaire pour former une première butée axiale dans une direction de tirage (T) de la structure tubulaire immergée, et d'autre part un second épaulement destiné à coopérer avec une seconde face d'appui correspondante dudit second élément de connexion tubulaire pour former une seconde butée axiale dans une direction opposée à ladite direction de tirage (T), il comporte en outre :
un moyen de verrouillage et de tension monté entre lesdits premier et second éléments de connexion tubulaires pour, en mettant en contact simultanément lesdits premier et second épaulements avec lesdites première et seconde faces d'appui, assurer une liaison à jeu axial nul entre ces deux éléments de connexion.

Avec cette structure particulière, une seule ligne de tirage suffit pour installer une ligne de transport de fluide (la structure tubulaire immergée), les moyens de verrouillage assurant la répartition des efforts en fonction des charges dynamiques entre la structure de support flottante et la ligne de transport.

De préférence, le moyen de verrouillage et de tension comporte au moins un vérin solidaire de ladite structure de support flottante. Ce vérin est monté à pivotement sur ledit second élément de connexion tubulaire, autour d'un axe d'articulation et à l'encontre d'un ressort de rappel entourant cet axe, de façon à permettre un encliquetage dudit premier élément de connexion tubulaire sur ledit second élément de connexion tubulaire.

Afin de garantir la tension de la liaison dans le temps, le moyen de verrouillage et de tension comporte en outre au moins un étai mis en place à jeu nul et effort de tensionnement prédéterminé en remplacement dudit au moins un vérin.

Avantageusement, ce moyen de verrouillage et de tension comporte plusieurs vérins répartis régulièrement autour du second élément de connexion tubulaire, un étai étant disposé entre chaque vérin.

Dans un mode de réalisation préféré, le premier élément de connexion tubulaire est relié à l'extrémité de la structure tubulaire immergée par un moyen d'articulation. Ce moyen d'articulation comporte avantageusement au moins une butée lamifiée sphérique.

### Brève description des dessins

D'autres caractéristiques et avantages de la présente invention ressortiront mieux de la description suivante, faite à titre indicatif et non limitatif, en regard des dessins annexés, sur lesquels:
- la figure 1 montre en coupe longitudinale un premier exemple de réalisation d'un connecteur selon l'invention,
- les figures 2a, 2b, 2c montrent en coupe longitudinale et dans différentes positions successives un second exemple de réalisation d'un connecteur selon l'invention,
- la figure 3 illustre en perspective un moyen de verrouillage et de tension du connecteur des figures 1 et 2,
- la figure 4 illustre en perspective une phase de montage du connecteur de la figure 1,
- la figure 5 illustre en perspective le connecteur de la figure 1 après montage,
- la figure 6 illustre la technique antérieure d'accrochage des lignes de transport, et
- la figure 7 est un schéma simplifié illustrant un système d'exploitation de champ pétrolier en eau profonde.

### Description détaillée d'un mode préférentiel de réalisation

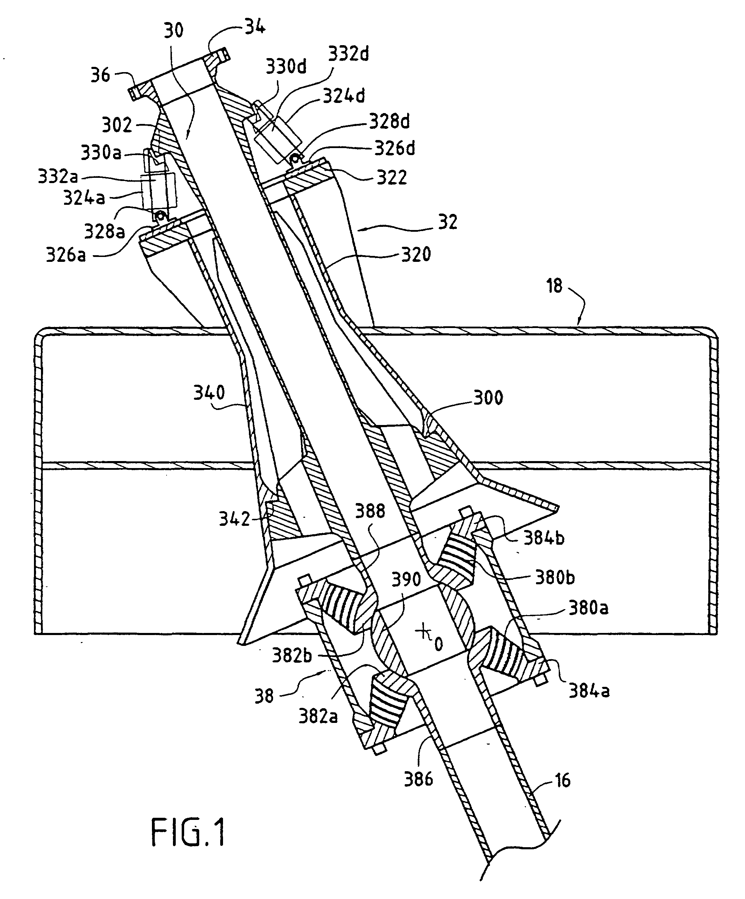

Un premier mode de réalisation d'un connecteur conforme à l'invention et destiné à relier une ligne export 16 de transport d'un fluide pétrolier à une bouée d'amarrage 18 est illustré à la figure 1.

Ce connecteur comporte un premier élément de connexion tubulaire (la partie mâle 30) destiné à être relié à la ligne de transport 16 et un second élément de connexion tubulaire, concentrique au précédent (la partie femelle correspondante ou « i-tube » 32) et porté par une partie de corps de la bouée ou « caisson » 18.

A une première extrémité de la partie mâle tubulaire est fixée, par exemple par soudage, une bride 34 dont la collerette est percée d'orifices 36 pour recevoir-des éléments de fixation à une tête de ligne de tirage (non représentée). A une seconde extrémité opposée de cette partie tubulaire mâle est fixée, par exemple par soudage, une première extrémité d'un moyen d'articulation à butée lamifiée sphérique 38 dont la seconde extrémité est fixée, par exemple par soudage, à la ligne de transport 16 du fluide à extraire.

Dans l'exemple illustré, le moyen d'articulation est un assemblage flexible conventionnel intégrant deux butées lamifiées sphériques 380a, 380b montées en opposition et comprenant chacune des couches rigides, par exemple métalliques, alternant avec des couches d'élastomère, les différentes couches étant adhérisées les unes aux autres. Les butées sont logées chacune entre une première armature 382a, 382b en forme de calotte sphérique et une seconde armature 384a, 384b en forme de bague. Chaque calotte sphérique prolonge une première partie tubulaire 386 (respectivement une seconde partie tubulaire 388) de cet assemblage destinée à être fixée à la ligne de transport 16 (à la partie mâle 30 du connecteur respectivement). Les deux bagues sont reliées entre elles fixement, par exemple par vissage. Les surfaces sphériques des faces des couches des deux butées et des faces des calottes et des bagues entre lesquelles la butée est disposée ont un centre commun O situé sur l'axe du moyen d'articulation. Intérieurement, les calottes sphériques 382a, 382b des deux butées coopèrent avec un obturateur sphérique 390 centré sur ce point O pour éviter de mettre en traction les butées lamifiées.

La partie tubulaire mâle du connecteur proprement dite présente une forme de cylindre creux avec, en partie inférieure, un premier épaulement annulaire 300 formant bague d'arrêt et destiné à limiter le déplacement axial de la partie de connecteur mâle 30 dans une première direction (la direction de tirage T de la ligne de transport 16) par rapport à la partie de connecteur femelle 32 et, en partie supérieure, un second épaulement annulaire 302 formant également bague d'arrêt et destiné à limiter le déplacement axial de la partie de connecteur mâle 30 dans une seconde direction, opposée à la première, par rapport à la partie correspondante de la partie de connecteur femelle 32.

Cette partie de connecteur femelle comprend une partie tubulaire 320 à section circulaire constituant un réceptacle (ou i-tube) pour la partie de connecteur mâle et fixée solidairement, par exemple par soudage, à une partie structurelle de la bouée 18.

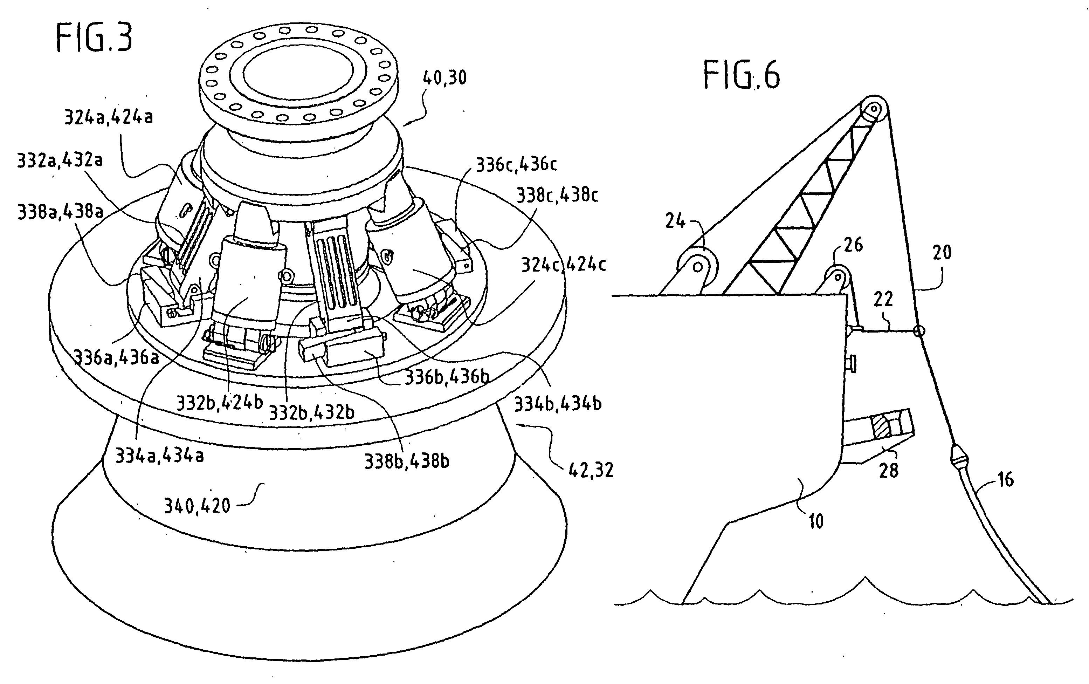

A son extrémité supérieure, cette partie tubulaire comporte une couronne annulaire 322 formant support pour un moyen de verrouillage et de tension formé de vérins articulés (par exemple quatre vérins 324a-324d) répartis régulièrement sur sa circonférence. Chaque vérin formé classiquement d'un ensemble cylindre-piston (le circuit d'alimentation du vérin n'est pas représenté mais bien entendu indispensable) articulé à pivotement (autour d'un axe d'articulation 326a-326d et à l'encontre d'un ressort de rappel 328a-328d entourant cet axe) au niveau d'une partie du cylindre en contact avec la couronne. Son piston comporte à sa partie supérieure libre une face d'appui 330a-330d destinée à recevoir le second épaulement annulaire 302 et à former ainsi une butée axiale pour le connecteur mâle dans la direction opposée à la direction de tirage. Entre chaque vérin sont disposés régulièrement des étais (par exemple quatre étais 332a-332d). Chaque étai convenablement incliné comporte un pied articulé 334a-334d qui repose sur une semelle 336a-336d et y est maintenu à l'aide d'un coin 338a-338d (voir plus précisément la figure 3).

A son extrémité inférieure, la partie tubulaire 320 s'évase pour former un cône de guidage et d'accostage 340. Ce cône comporte dans sa partie interne une nervure circulaire 342 destinée à coopérer avec le premier épaulement 300 et ainsi former une autre butée axiale pour le connecteur mâle, cette fois dans la direction de tirage de la ligne de transport 16. La distance entre les deux butées axiales de la partie de connecteur femelle est bien entendu déterminée pour correspondre (à un jeu axial de fonctionnement près) à celle existant entre les épaulements de la partie de connecteur mâle.

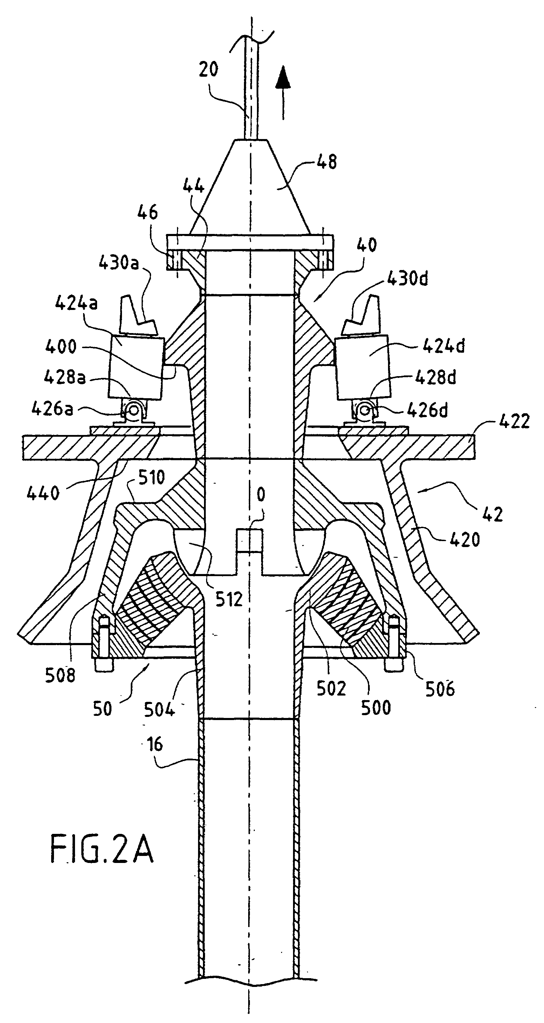

Un second mode de réalisation d'un connecteur conforme à l'invention et destiné à relier une ligne 16 de transport d'un fluide pétrolier à un support flottant 10 de type FPSO est illustré aux figures 2a à 2c.

Ce connecteur comporte comme précédemment un premier élément de connexion tubulaire (la partie mâle 40) destiné à être relié à la ligne de transport 16 et un second élément de connexion tubulaire (la partie femelle correspondante 42) porté par une partie fixe structurelle du FPSO 10.

A une première extrémité de la partie mâle tubulaire est fixée, par exemple par soudage, une bride 44 dont la collerette est percée d'orifices 46 pour recevoir des éléments de fixation à une tête 48 d'une ligne unique de tirage 20. A une seconde extrémité opposée de cette partie tubulaire mâle est fixée, par exemple par soudage, une première extrémité d'un moyen d'articulation à butée lamifiée sphérique 50 dont la seconde extrémité est fixée solidairement, par exemple par soudage, à la ligne de transport 16.

Le moyen d'articulation est un assemblage à joint flexible conventionnel intégrant une butée d'articulation lamifiée 500 comprenant des couches rigides, par exemple métalliques, alternant avec des couches d'élastomère, les différentes couches étant adhérisées les unes aux autres. Cette butée est logée entre une armature 502 en forme de calotte sphérique solidaire d'une première partie tubulaire 504 de cet assemblage destinée à être fixée à la ligne de transport 16 et une armature 506 constituée par une bague reliée fixement, par exemple par vissage, à une seconde partie tubulaire 508 de cet assemblage destinée à être fixée à la partie mâle 40 du connecteur. Les faces des couches de la butée et des faces de la calotte et de la bague entre lesquelles la butée est disposée ont des surfaces sphériques concentriques centrées en un point commun O situé sur l'axe de l'articulation flexible (qui est confondu avec l'axe de la ligne de transport lorsque celle-ci est verrouillée sur l'installation flottante). La seconde partie tubulaire de l'assemblage 508 présente une forme générale extérieure en cloche avec un épaulement annulaire externe 510 formant embase et destiné à limiter le déplacement axial de la partie de connecteur mâle 40 dans une première direction (la direction de tirage T de la ligne de transport illustrée par la flèche) par rapport à la partie correspondante de la partie de connecteur femelle 42. Intérieurement, cette partie tubulaire comporte une partie sphérique 512 qui est destinée à coopérer avec la calotte sphérique 502 pour éviter de mettre sous tension la butée lamifiée.

La partie tubulaire mâle du connecteur proprement dite est un simple cylindre creux dont une partie centrale externe comporte un épaulement annulaire 400 formant bague d'arrêt destiné à limiter le déplacement axial de la partie de connecteur mâle 40 dans une seconde direction, opposée à la précédente, par rapport à la partie correspondante de la partie de connecteur femelle 42.

Cette partie de connecteur femelle comprend une partie tubulaire 420 à section circulaire constituant un réceptacle pour la partie de connecteur mâle et fixée solidairement, par exemple par soudage, à une partie structurelle du FPSO.

A son extrémité supérieure, cette partie tubulaire comporte une couronne annulaire 422 formant support pour un moyen de verrouillage et de tension formé de vérins articulés (par exemple quatre vérins 424a-424d) répartis régulièrement sur sa circonférence. Chaque vérin formé classiquement d'un ensemble cylindre-piston (dont le circuit d'alimentation du vérin n'est pas représenté mais bien entendu nécessaire) est articulé à pivotement (autour d'un axe d'articulation 426a-426d et à l'encontre d'un ressort de rappel 428a-428d entourant cet axe) au niveau d'une partie de son cylindre en contact avec la couronne. Son piston comporte à sa partie supérieure libre une face d'appui 430a-430d destinée à recevoir l'épaulement annulaire 400 et à former ainsi une butée axiale pour le connecteur mâle dans la direction opposée à la direction de tirage. Entre chaque vérin, et comme dans le mode de réalisation précédent illustré à la figure 3, sont disposés régulièrement des étais (par exemple quatre étais 432a-432d). Chaque étai convenablement incliné comporte un pied 434a-234d qui repose sur une semelle 436a-436d et y est maintenu à l'aide d'un coin 438a-438d.

A son extrémité inférieure, la partie cylindrique 420 s'évase pour former un cône de guidage et d'accostage. Elle comporte en outre dans sa partie interne une nervure circulaire 440 destinée à coopérer avec l'épaulement 510 pour former une butée axiale pour le connecteur mâle dans la direction de tirage de la ligne de transport. La distance entre les deux butées axiales de la partie de connecteur femelle est bien entendu déterminée pour correspondre (à un jeu axial de fonctionnement près) à celle existant entre les épaulements de la partie de connecteur mâle.

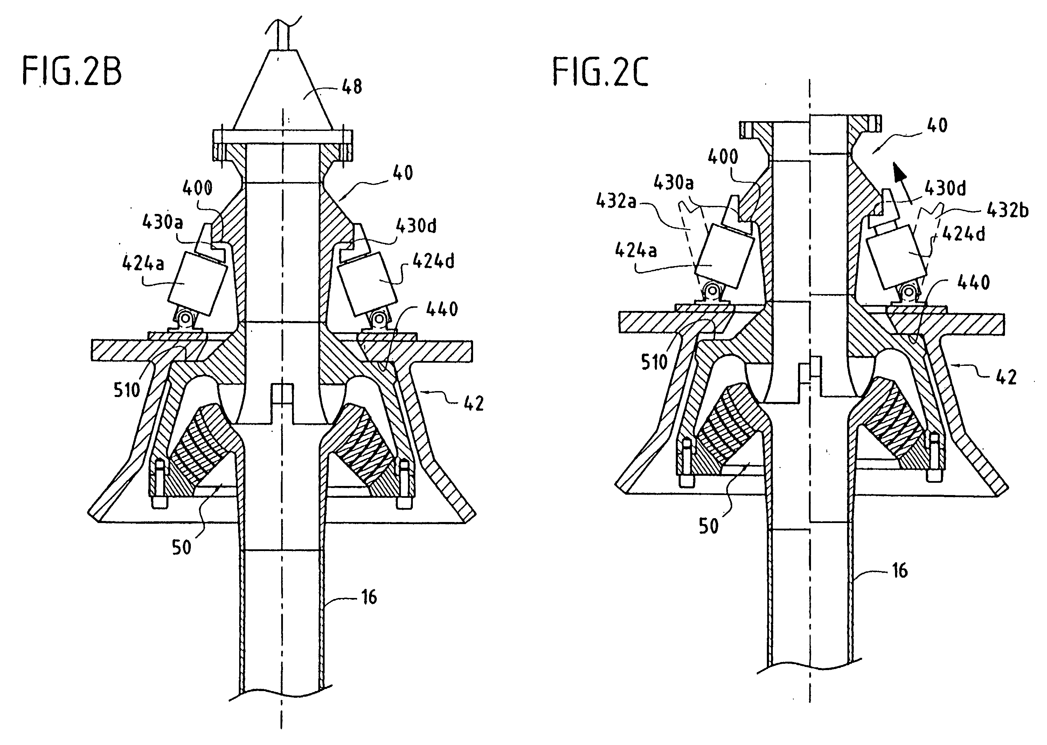

Le montage d'une ligne de transport s'effectue en plusieurs étapes comme suit. Tout d'abord, la ligne de transport 16 est tirée depuis une de ses extrémités directement au travers de la partie femelle 42 de connecteur. Cette opération, contrairement à l'art antérieur, est réalisée au moyen d'une seule ligne de tirage 20 actionnée par un treuil unique. Dans cette première phase, on peut noter que les vérins articulés 424a-424d sont repoussés vers l'extérieur par la partie mâle 40 de connecteur (figure 2a). Lorsque l'ensemble vient en butée axiale, c'est à dire lorsque le premier épaulement 510 vient en contact avec la nervure 440 de la partie femelle de connecteur, les vérins sous l'action des ressorts de rappel 428a-428d se retrouvent plaqués contre la partie mâle de connecteur, réalisant en quelque sorte un encliquetage du connecteur. Il existe alors un jeu axial de fonctionnement au niveau des vérins (figure 2b). Puis, la rotation du treuil est arrêté et on relâche la tension sur la ligne de tirage, ce qui a pour effet de permettre à la ligne de transport par l'intermédiaire du second épaulement 400 de la partie mâle de connecteur de reposer sur les vérins (plus précisément sur leurs faces d'appui 430a-430d). Le jeu axial de fonctionnement est alors reporté au niveau de la butée axiale formée par les épaulements 440, 510 (partie gauche de la figure 2c). Ensuite, pour permettre un fonctionnement dynamique sain de la liaison, le jeu est éliminé en actionnant les vérins en poussée (dans le sens de la flèche) jusqu'à obtenir un effort de tensionnement déterminé dépendant des charges dynamiques existantes entre la structure support et la ligne de transport. Cette action a pour effet de mettre la liaison sous précontrainte (partie droite de la figure 2c). Enfin, pour obtenir une liaison fiable dans le temps, les vérins sont remplacés par les étais 432a-432d mis en place à jeu nul avec un effort de tensionnement prédéterminé par les vérins. Une fois en place, les vérins sont dépressurisés (et ôtés si nécessaire) et la pré-compression est alors transférée dans ces étais (figure 3). La liaison est verrouillée, la ligne de tirage est enlevée et la bride 44 est alors raccordée à une canalisation de fourniture du fluide pétrolier (non représentée). Le transport du fluide peut alors s'engager.

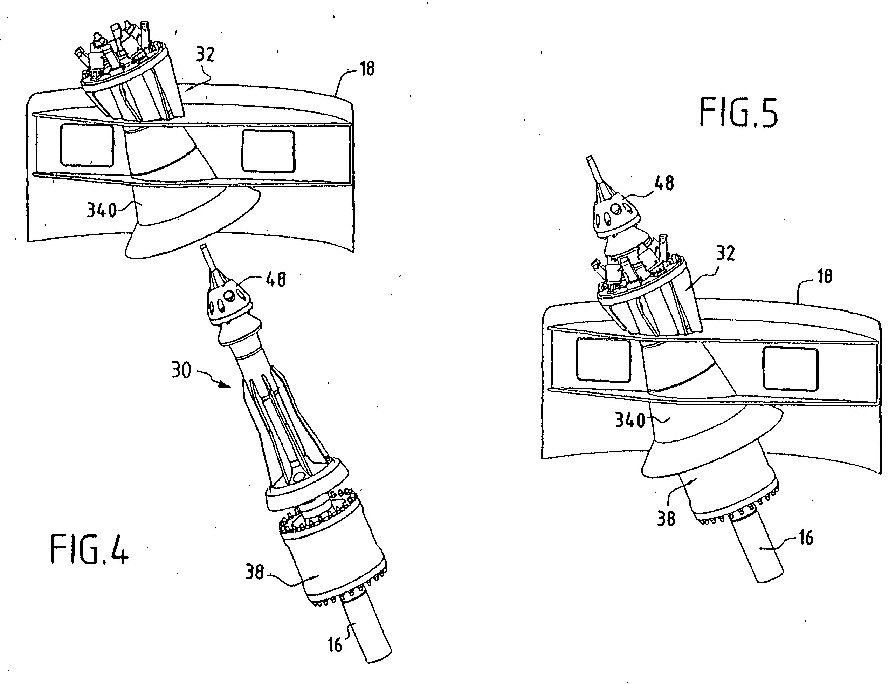

Ce principe de montage s'applique pareillement au connecteur de la figure 1 assurant la liaison de la ligne de transport 16 au niveau de la bouée d'amarrage 18. La figure 4 montre l'étape initiale de tirage de la ligne au travers de la partie femelle de connecteur guidée par le cône d'accostage 340. Et la figure 5 montre une étape suivante dans laquelle la ligne est encliquetée dans le connecteur, préalablement au verrouillage par les étais. Une fois verrouillé, le connecteur se retrouve dans la position de la figure 3, vérins dépressurisés et étais sous pression.

On aura compris que ce système de connexion fonctionne quel que soit le type de ligne de transport (donc pour tous types de « risers »), que cette ligne soit flexible ou non et qu'elle soit munie ou non d'un assemblage à joint flexible. De même, la bride peut ou non faire partie intégrante du connecteur. On notera également, que si la configuration avec étais est préférable, il peut aussi être envisagé de remplacer ces étais par un système actif régulé dont la réalisation, sans difficulté particulière, est à la portée de l'homme de l'art.

## Revendications

1. Dispositif de connexion d'une structure tubulaire immergée (16) sur une structure de support flottante (10, 18) comprenant des premier (30, 40) et second (32, 42) éléments de connexion tubulaires concentriques reliés respectivement à une extrémité de la structure tubulaire immergée et à la structure de support flottante,
ledit premier élément de connexion tubulaire (30, 40) comportant un premier épaulement (300, 510) destiné à coopérer avec une première face d'appui correspondante (342, 440) dudit second élément de connexion tubulaire (32, 42) pour former une première butée axiale dans une direction de tirage de la structure tubulaire immergée (16), **caractérisé en ce que**, ledit premier élément de connexion tubulaire comporte un second épaulement (302, 400) destiné à coopérer avec une seconde face d'appui correspondante (330a-330d, 430a-430d) dudit second élément de connexion tubulaire (32, 42) pour former une seconde butée axiale dans une direction opposée à ladite direction de tirage, ledit dispositif comportant en outre:
un moyen de verrouillage et de tension monté entre lesdits premier et second éléments de connexion tubulaires (30, 40 ; 32, 42) pour, en mettant en contact simultanément lesdits premier et second épaulements avec lesdites première et seconde faces d'appui, assurer une liaison à jeu axial nul entre ces deux éléments de connexion.

2. Dispositif de connexion selon la revendication 1, **caractérisé en ce que** ledit moyen de verrouillage et de tension comporte au moins un vérin (324a-324d, 424a-424d) solidaire de ladite structure de support flottante.

3. Dispositif de connexion selon la revendication 2, **caractérisé en ce que** ledit au moins un vérin est monté à pivotement sur ledit second élément de connexion tubulaire (32, 42), autour d'un axe d'articulation (326a-326d, 426a-426d) et à l'encontre d'un ressort de rappel (328a-328d, 428a-428d) entourant cet axe, de façon à permettre un encliquetage dudit premier élément de connexion tubulaire sur ledit second élément de connexion tubulaire.

4. Dispositif de connexion selon la revendication 1, **caractérisé en ce que** ledit moyen de verrouillage et de tension comporte en outre au moins un étai (332a-332d, 432a-432d) mis en place à jeu nul et effort de tensionnement prédéterminé en remplacement dudit au moins un vérin (324a-324d, 424a-424d).

5. Dispositif de connexion selon la revendication 4, **caractérisé en ce que** ledit moyen de verrouillage et de tension comporte plusieurs vérins (324a-324d, 424a-424d) répartis régulièrement autour du second élément de connexion tubulaire (32, 42), un étai (332a-332d, 432a-432d) étant disposé entre chaque vérin.

6. Dispositif de connexion selon la revendication 1, **caractérisé en ce que** ledit premier élément de connexion tubulaire (30, 40) est relié à ladite extrémité de la structure tubulaire immergée (16) par un moyen d'articulation (38, 50).

7. Dispositif de connexion selon la revendication 6, **caractérisé en ce que** ledit moyen d'articulation (38, 50) comporte au moins une butée lamifiée sphérique (380a, 380b ; 500).

## Patentansprüche

1. Vorrichtung zum Verbinden einer röhrenförmigen Unterwasserstruktur (16) mit einer schwimmenden Tragstruktur (10, 18), umfassend erste (30, 40) und zweite (32, 42) röhrenförmige, konzentrische Verbindungselemente, die mit einem Ende der röhrenförmigen Unterwasserstruktur bzw. mit der schwimmenden Tragstruktur verbunden sind,
wobei das erste röhrenförmige Verbindungselement (30, 40) eine erste Schulter (300, 510) aufweist, welche dazu bestimmt ist, mit einer entsprechenden ersten Stützfläche (342, 440) des zweiten röhrenförmigen Verbindungselements (32, 42) zusammenzuwirken, um einen ersten axialen Anschlag in einer Zugrichtung der röhrenförmigen Unterwasserstruktur (16) zu bilden,
**dadurch gekennzeichnet,**
**daß** das erste röhrenförmige Verbindungselement eine zweite Schulter (302, 400) aufweist, die dazu bestimmt ist, mit einer entsprechenden zweiten Stützfläche (330a-330d, 430a-430d) des zweiten röhrenförmigen Verbindungselements (32, 42) zusammenzuwirken, um einen zweiten axialen Anschlag in einer zu der genannten Zugrichtung entgegengesetzten Richtung zu bilden,
wobei die Vorrichtung außerdem ein Verriegelungs- und Spannmittel umfaßt, das zwischen den ersten und zweiten röhrenförmigen Verbindungselementen (30, 40; 32, 42) angebracht ist, um **dadurch**, daß die erste und die zweite Schulter mit der ersten und der zweiten Stützfläche gleichzeitig in Kontakt gebracht werden, eine Verbindung ohne axiales Spiel zwischen diesen beiden Verbindungselementen sicherzustellen.

2. Verbindungsvorrichtung nach Anspruch 1, **dadurch gekennzeichnet, daß** das Verriegelungs- und Spannmittel wenigstens einen Zylinder (324a-324d, 424a-424d) umfaßt, der mit der genannten schwimmenden Tragstruktur fest verbunden ist.

3. Verbindungsvorrichtung nach Anspruch 2, **dadurch gekennzeichnet, daß** der wenigstens eine Zylinder an dem zweiten röhrenförmigen Verbindungselement (32, 42) um eine Gelenkachse (326a-326d, 426a-426d) und entgegen einer Rückstellfeder (328a-328d, 428a-428d), welche diese Achse umgibt, schwenkbar angebracht ist, derart, daß ein Verrasten des ersten röhrenförmigen Verbindungselements an dem zweiten röhrenförmigen Verbindungselement ermöglicht wird.

4. Verbindungsvorrichtung nach Anspruch 1, **dadurch gekennzeichnet, daß** das Verriegelungs- und Spannmittel außerdem wenigstens eine Strebe (332a-332d, 432a-432d) umfaßt, die ohne Spiel und mit vorbestimmter Spannkraft als Ersatz für den wenigstens einen Zylinder (324a-324d, 424a-424d) angeordnet ist.

5. Verbindungsvorrichtung nach Anspruch 4, **dadurch gekennzeichnet, daß** das Verriegelungs- und Spannmittel mehrere Zylinder (324a-324d, 424a-424d) umfaßt, die gleichmäßig um das zweite röhrenförmige Verbindungselement (32, 42) herum angeordnet sind, wobei eine Strebe (332a-332d, 432a-432d) zwischen jedem Zylinder angeordnet ist.

6. Verbindungsvorrichtung nach Anspruch 1, **dadurch gekennzeichnet, daß** das erste röhrenförmige Verbindungselement (30, 40) über ein Gelenkmittel (38, 50) mit dem genannten Ende der röhrenförmigen Unterwasserstruktur (16) verbunden ist.

7. Verbindungsvorrichtung nach Anspruch 6, **dadurch gekennzeichnet, daß** das Gelenkmittel (38, 50) wenigstens einen aus Schichten bestehenden, kugelförmigen Anschlag (380a, 380b; 500) umfaßt.

## Claims

1. A connection device for connecting a submerged tubular structure (16) to a floating support structure (10, 18), said connection device comprising a first tubular connection element (30, 40) and a second tubular connection element (32, 42) concentric with said first element, the connection elements being connected respectively to one end of the submerged tubular structure, and to the floating support structure,
said first tubular connection element (30, 40) being provided with a first shoulder (300, 510) serving to co-operate with a corresponding first abutment face (342, 440) of said second tubular connection element (32, 42) to form a first axial abutment in a pulling direction in which the submerged tubular structure (16) is pulled, said connection device being **characterised in that** said first tubular connection element being provided with a second shoulder (302, 400) serving to co-operate with a corresponding second abutment face (330a-330d, 430a-430d) of said second tubular connection element (32, 42) to form a second axial abutment in a direction opposite said pulling direction, said connection device further comprising:
locking and tensioning means mounted between said first and second tubular connection elements (30, 40; 32, 42) to act, by putting said first and second shoulders simultaneously in contact with said first and second abutment faces, to provide coupling with zero axial clearance between said two connection elements.

2. A connection device according to claim 1, **characterised in that** said locking and tensioning means comprise at least one actuator (324a-324d, 424a-424d) secured to said floating support structure.

3. A connection device according to claim 2, **characterised in that** said at least one actuator is mounted to pivot on said second tubular connection element (32, 42) about a hinge axis (326a-326d, 426a-426d) and against the effect of a return spring (328a-328d, 428a-428d) surrounding said pin, so as to enable said first tubular connection element to be snap-fastened onto said second tubular connection element.

4. A connection device according to claim 1, **characterised in that** said locking and tensioning means further comprise at least one stay (332a-332d, 432a-432d) put in place at zero clearance and at a predetermined tensioning force by replacing said at least one actuator (324a-324d, 424a-424d).

5. A connection device according to claim 4, **characterised in that** said locking and tensioning means comprise a plurality of actuators (324a-324d, 424a-424d) distributed uniformly about the second tubular connection element (32, 42), a stay (332a-332d, 432a-432d) being disposed between each actuator.

6. A connection device according to claim 1, **characterised in that** said first tubular connection element (30, 40) is connected to said end of the submerged tubular structure (16) via hinge means (38, 50).

7. A connection device according to claim 6, **characterised in that** said hinge means (38, 50) comprise at least one spherical laminated abutment (380a, 380b; 500).
